(19) Europäisches Patentamt
European Patent Office
Office européen des brevets

(11) EP 4 671 909 A1

(12) EUROPEAN PATENT APPLICATION

(43) Date of publication:
31.12.2025 Bulletin 2026/01

(51) International Patent Classification (IPC):
G06F 1/04 (2006.01)

(21) Application number: 24184306.9

(22) Date of filing: 25.06.2024

(52) Cooperative Patent Classification (CPC):
G06F 1/04; G06F 1/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Adtran Networks SE
98617 Meiningen (DE)

(72) Inventor: Stern, Alon
2630528 Haifa (IL)

(74) Representative: Grünecker Patent- und
Rechtsanwälte
PartG mbB
Leopoldstraße 4
80802 München (DE)

(54) TIMEKEEPING OF A CLOCK DEVICE

(57) There is provided a technique of timekeeping of a clock device. The technique comprises: in the presence of an inbound reference timing signal, continuously tuning during a learning period a phase-frequency (PF) adaptive sub-model and phase-frequency-drift (PFD) adaptive sub-model, both sub-models continuously providing estimates of a state of the oscillator; selecting a sub-model to use its last before holdover (LBH) estimates for correcting an output timing signal, the selection provided in accordance with the relationship between duration of the learning period and a learning threshold characterizing the oscillator; and during a holdover continuously generating a corrected output timing signal using the LBH estimates provided by the selected sub-model. The technique further comprises defining a first (OD1) and a second (OD2) optimal duration thresholds informative of the optimal duration of tuning, respectively, PF adaptive algorithm and PFD adaptive algorithm; and tuning the sub-models accordingly.

Figure 3

## Description

## TECHNICAL FIELD

The presently disclosed subject matter relates to the field of synchronization of clock devices in time-aware networks and/or of time-sensitive applications and, more particularly, to maintaining precise time parameters of a clock device in the absence of a time reference.

## BACKGROUND

Proper operation of a time-aware network (e.g. a telecommunication network, a distributed computer system, etc.) and/or time-sensitive applications (e.g. audio, video, time-sensitive control, etc.) requires time of day, phase and frequency synchronization between various clocks therein. Synchronization can be achieved, for example, by exchanging timing information (time-transfer) across the network in accordance with time-transfer protocols (e.g. IEEE 1588 Precision Time Protocol (PTP), Network Time Protocol (NTP), etc).

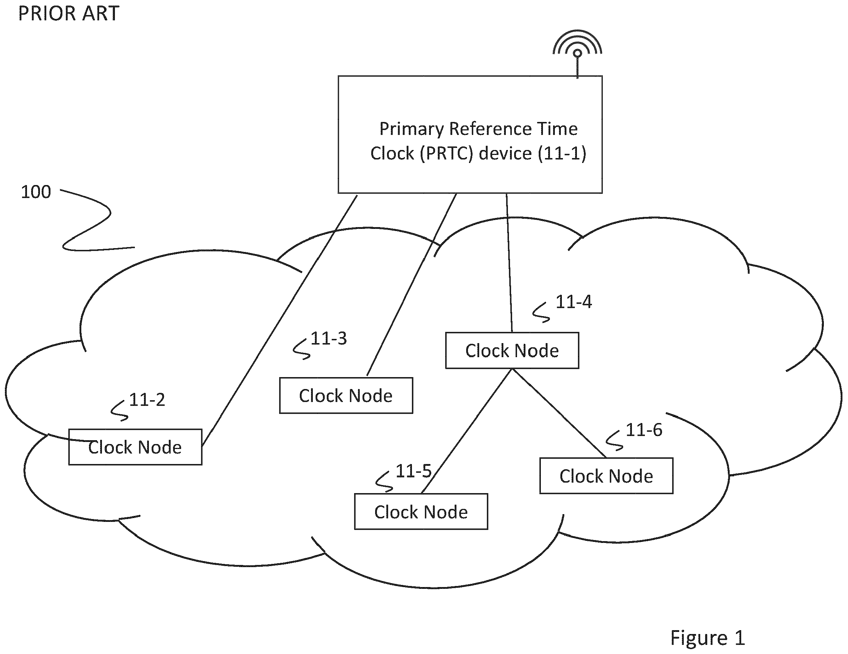

Operating a typical time-aware network and/or a time-sensitive application is based on synchronizing clock devices with a reference clock. **Fig. 1** schematically illustrates a non-limiting example of a time-aware network **100,** including a plurality of clock devices (referred to hereinafter also as clock nodes) denoted as **11-1** - **11-6** and implementing a time-transfer protocol as known in prior art. The exemplary network **100** is a timing distribution network and can operate on top of a packet-compatible communication network (not shown) which comprises a plurality of network nodes organized in ring, bus, tree, star, or mesh topologies, or a combination of different topologies. Clock nodes can correspond to network nodes of the underlying data network and can constitute parts of the respective network nodes.

Clock nodes **11-2** - **11-4** are operatively connected to the clock node **11-1** via respective clock ports (not shown). Clock node **11-1** is configured to be the source of synchronization data in the network and to serve as a primary reference time clock (PRTC) node receiving reference timing signal from GNSS (Global Navigation Satellite Systems) and providing the reference timing signals to the clock nodes **11-2** - **11-4**. Clock node **11-4** is configured as a boundary clock node receiving PTP-based timing reference signal and providing, in turn, reference timing signals to nodes **11-5** and **11-6**.

Thus, the reference clock (e.g. primary reference time clock such as a GNSS and/or atomic clock, PTP reference clock, etc.) provides reference timing signals to the respective clock devices. Each given clock device generates a timing signal in accordance with the received reference timing signals.

However, in some circumstances (e.g. source failures or blockages, network congestion, network fault, etc.) a given clock device can temporarily lose the reference timing signal and enter into a time holdover period (referred to hereinafter also as holdover) characterized by the absence of an incoming time reference. The holdover period can last from a few seconds to several days or more.

In the absence of an incoming reference signal, the clock device continues to generate a timing signal using the last valid reference timing data received before the loss of the reference signal. The clock device generates the timing signal with the help of a local oscillator (free running or controlled using a feedback loop). The local oscillator can be an internal oscillator of the clock device. Some clock devices can use external frequency reference received via data network interface(s) or dedicated frequency interface(s). For example, ePRC (Enhanced Primary Reference Clock) can serve as an external frequency source.

However, the oscillators can be instable due to various reasons as, for example, temperature fluctuations and/or ageing effects. Thus, there is a need for precise timekeeping of a clock device, thereby retaining its accurate frequency and phase offsets during the holdover.

Problems of precise timekeeping in the absence of time reference have been recognized in the conventional art and various techniques have been developed to provide solutions, for example:

US Patent publication No. 2023/0315025 discloses a technique of predictive clock modelling. The method includes collecting a characteristic of a first clock disposed therein via a first node; collecting a characteristic of a second clock disposed therein via a second node; receiving an instance of time of the first clock via the first node and receiving an instance of time of the second clock via the second node. The method further includes causing to determine a time offset and/or frequency offset between the first and second clock via a model based on the collected characteristic and the received instance of time from each of the first and second nodes; and transmitting an indication of the determined time offset and/or frequency offset output from the model to the second node.

US Patent Publication No. 2021/0266086 discloses a technique of improving phase clock performance for a system embedded with GNSS receiver. The technique includes storing a phase history of the GNSS receiver output; determining an expected value of phase of the GNSS receiver output based on the phase history; and, responsive to a degradation of the GNSS receiver output, adjusting the GNSS receiver output utilizing the expected value of phase. The systems and method can further include, responsive to degradation being a loss of the GNSS receiver output, utilizing a holdover output from a physical frequency reference and with a phase adjusted based on the expected value of phase, and, responsive to the variation, utilizing the phase history to re-generate the GNSS receiver output for performance enhancement.

US Patent Publication No. 2009/0278616 discloses a method and apparatus for correcting oscillator frequency drift due to crystal aging. Correction signals that reflect a difference between an oscillator timing signal and a reference timing signal over a reference timing signal interval are modelled so that auxiliary correction signals can be generated in the event of loss of the reference timing signal. A temperature curve is generated to model how temperature variation impacts oscillator frequency drift. A rate of frequency drift due to crystal aging is also determined. During loss of a reference timing signal, auxiliary correction signals can be generated to maintain the oscillator at a desired frequency until the reference timing signal becomes available again.

US Patent Publication No. 2009/0167443 discloses a system and method for generating a highly stable holdover clock utilizing an integrated circuit and an external Oven Controlled Crystal Oscillator (OCXO). The integrated circuit comprises an input reference clock receiver, a phase and frequency detector that generates an error signal between the input reference clock signal and a feedback clock signal, a data storage block that stores model parameters to predict frequency variations of the OCXO, an adaptive filtering module that includes a digital loop filter and algorithms for updating the model parameters and predicting frequency variations based on the model, a switch that enables the system to operate in normal or holdover mode, a digitally controlled oscillator, and a feedback divider.

US Patent No. 7,424,069 discloses a reference timing signal apparatus with a phase-locked loop having a computer algorithm which adaptively models the multiple frequencies of an oscillator following a training period. The oscillation frequency of the oscillator is controlled in response to a phase detector output. The computer algorithm processes the control signal applied to the oscillator. The computer algorithm updates the characteristics of the model relating to the aging and temperature of the oscillator, using for example, a Kalman filter as an adaptive filter. By the algorithm, the subsequent model predicts the future frequency state of the oscillator on which it was trained. The predicted frequency of the model functions as a reference to correct the frequency of the oscillator if no input reference timing signal is available. In the case of using pre-processing infinite impulse response filters (IIRFs) before the adaptive processor, the time delay caused by the filters are compensated after the adaptive processor. Without pre-processing IIRFs, aging and temperature update rates are adaptively controlled by dynamically changing the rates depending upon the loop condition to achieve a wider tracking bandwidth. With the model updating algorithm, oscillators of low stability performance may be used as cellular base station reference oscillator.

The references cited above teach background information that may be applicable to the presently disclosed subject matter. Therefore, the full contents of these publications are incorporated by reference herein where appropriate for appropriate teachings of additional or alternative details, features and/or technical background.

## GENERAL DESCRIPTION

A state of an oscillator can be characterized using three deterministic variables: $x(t)$, informative of the time/phase difference between the oscillator's output and that of a reference device (or a previous measurement); $y(t)$, informative of the frequency difference thereof; and $d(t)$, informative of the change rate (drift) in frequency.

The state of an oscillator can be deduced with the help of adaptive models applied to respective measurements. Non-limiting examples of such models are disclosed in the article by J. Levine (J. Levine. The statistical modeling of atomic clocks and the design of time scales, Rev Sci Instrum. 83, 021101 (2012)) and the article of L. Breakiron (L. Breakiron. A Comparative Study of Clock Rate and Drift Estimation. NASA. Goddard Space Flight Center, The 25th Annual Precise Time and Time Interval (PTTI) Applications and Planning Meeting, 1994). These articles are incorporated herein by reference.

An adaptive model estimates the state of the oscillator in the presence of the reference timing signal. When the reference timing signal is lost, the last estimates of the state are usable for correcting an output timing signal of the clock device. The period of tuning the adaptive model in the present of the reference timing signal is referred to hereinafter as a "learning period". It is noted that when the reference timing signal is back, the adaptive model may need to re-start learning (tuning) if the holdover was long enough (e.g. several hours for PRTC devices, several days for ePRTC (Enhanced Primary Reference Time Clock) devices), etc.

The known in the conventional art methods of estimating the state variables either disregard frequency offset drift (e.g. using 2-variables adaptive models such as first order polynomial fitting approach, phase-frequency Kalman filter model, etc.) or attempt to unconditionally jointly estimate the frequency offset and its drift (e.g. using 3-variables adaptive models such as second-order polynomial fitting approach, phase-frequency-drift Kalman filter model, etc.).

Nowadays, advancing network architectures and services elevate the synchronization demands. For example, as ITU-T standard G.8272.1 requires holdover time accuracy of ePRTC to be within 100ns of UTC (Coordinated Universal Time) for up to 40 days, depending on the learning period obtained when the ePRTC was locked to UTC prior to the holdover.

The inventor has recognized that while jointly estimating both frequency offset and its drift can, in certain circumstances, introduce errors that exceed the maximum drift of a modern precise oscillator, enduring holdover stability still necessitates considering the frequency drift.

Accordingly, the inventor has proposed to correct the output timing signal using a combined adaptive model . Namely, to use estimates by phase-frequency (2 variables) adaptive sub-model when a duration of an available learning period is less than a certain learning threshold, and, alternatively, use estimates by a phase-frequency-drift (3 variables) adaptive sub-model when/if the duration of the available learning period exceed the certain learning threshold, thereby enabling the precise timekeeping. The learning threshold can be predefined in accordance with known characteristics of the oscillator or can be defined during the oscillator's operation.

The proposed approach is applicable for a holdover period of a free running oscillator. Likewise, the approach is applicable for a controlled oscillator when operating with and/or without reference timing signal.

In accordance with certain aspects of the presently disclosed subject matter, there is provided a method of timekeeping of a clock device operating in conjunction with an oscillator. The method comprises: in the presence of an inbound reference timing signal, continuously tuning during a learning period a phase-frequency (PF) adaptive sub-model using a PF adaptive algorithm and phase-frequency-drift (PFD) adaptive sub-model using a PFD adaptive algorithm, both sub-models continuously providing estimates of a state of the oscillator; selecting a sub-model to use its last before holdover (LBH) estimates for correcting an output timing signal, the selection provided in accordance with the relationship between duration of the learning period and a learning threshold characterizing the oscillator; and during a holdover period continuously generating a corrected output timing signal using the LBH estimates provided by the selected sub-model. Selecting the sub-model can be provided prior to the holdover or responsive to the loss of the reference timing signal.

In accordance with further aspects of the presently disclosed subject matter, the method further comprises using LBH estimates of phase and frequency of the oscillator provided by PF adaptive sub-model when a duration of the learning period is less than the learning threshold,; and using LBH estimates of phase, frequency and drift of the oscillator provided by PFD adaptive sub-model when the duration of the learning period exceeds the learning threshold.

In accordance with further aspects and, optionally, in combination with other aspects of the presently disclosed subject matter, the learning threshold can be predefined with the help of simulation using known characteristics of the oscillator and be pre-configured for the clock device. Alternatively or additionally, the learning threshold can be calculated based on historical data informative of phase and frequency changes of the oscillator during its operation in the presence of inbound reference timing signal and be configured during operation of the clock device.

In accordance with further aspects and, optionally, in combination with other aspects of the presently disclosed subject matter, the oscillator operating in conjunction with the clock device can be an internal oscillator of the clock device or an external oscillator. Further, the oscillator operating in conjunction with the clock device can be a free running oscillator or a controlled oscillator.

In accordance with further aspects and, optionally, in combination with other aspects of the presently disclosed subject matter, the PF adaptive sub-model can use a 1st order polynomial fitting estimations algorithm or a phase-frequency Kalman filter algorithm and PFD adaptive sub-model can use a 2nd order polynomial fitting estimations algorithm or a phase-frequency-drift Kalman filter algorithm. PF adaptive sub-model and PFD adaptive sub-model can be based on the same or on different kinds of algorithms.

In accordance with further aspects and, optionally, in combination with other aspects of the presently disclosed subject matter, the method can further comprise defining a first optimal duration (OD1) threshold informative of the optimal duration of tuning a phase-frequency adaptive algorithm used in PF adaptive sub-model and/or a second optimal duration (OD2) threshold informative of the optimal duration of a phase-frequency-drift adaptive algorithm used in PFD adaptive sub-model.

In accordance with further aspects and, optionally, in combination with other aspects of the presently disclosed subject matter, the method can further comprise: storing values informative of time/phase and frequency restored during operating the clock device in the presence of the reference timing signal thereby giving rise to past timing data; obtaining a plurality of sets of the past timing data, different sets corresponding to different history lengths; applying one or more phase-frequency adaption algorithms and one or more phase-frequency-drift adaption algorithm for each set of the past timing data; calculating, for each adaptive algorithm, for each history length and for every timestep, residuals informative of deviations between respective past timing data and predictions by the adaptive algorithms; and performing statistical analyses over the residuals to identify an optimal duration of learning period for each of the adaptive algorithms, thereby defining at least one of the learning threshold, OD1 threshold and OD2 threshold.

In accordance with further aspects and, optionally, in combination with other aspects of the presently disclosed subject matter, the method can further comprise:

when learning period is less than OD1 threshold, using the estimates by the PF sub-model that is tuned based on entire available learning history;

when learning period exceeds OD1 threshold but less than the learning threshold, using the estimates by the PF sub-model that is tuned based on the learning history corresponding, at each timestep, to data in a backward window with duration OD1;

when learning period is less than OD2 threshold but exceeds the learning threshold, using the estimates by the PFD sub-model that is tuned based on entire available learning history; and

when learning period exceeds OD2 threshold but exceeds the learning threshold, using the estimates by the PFD sub-model that is tuned based on the learning history corresponding, at each timestep, to data in a backward window with duration OD2.

In accordance with other aspects of the presently disclosed subject matter, there is provided a clock device configured to perform timekeeping in accordance with the method above.

In accordance with other aspects of the presently disclosed subject matter, there is provided a computer program product implemented on a non-transitory computer usable medium having computer readable program code embodied therein to cause the computer to perform the method above.

Among the advantages of certain embodiments of the presently disclosed subject matter is enabling the enhanced accuracy of ePRTC clock devices during extended holdover period. Among further advantages is achieving enhanced holdover precision of various range of oscillators usable for PRTC products, PTP boundary clocks, PTP slaves, NTP slaves, etc.

Among further advantages of certain embodiments of the presently disclosed subject matter is enabling the enhanced accuracy of clock devices with the controlled oscillator also when operating in the presence of reference timing signal.

**BRIEF DESCRIPTION OF THE DRAWINGS**

To understand the invention and to see how it can be carried out in practice, embodiments will be described, by way of non-limiting examples, with reference to the accompanying drawings, in which:

**Fig. 1** illustrates a generalized schematic architecture of an exemplary timing distribution network as known in prior art;

**Fig. 2** illustrates a generalized block diagram of a clock device in accordance with certain embodiments of the presently disclosed subject matter;

**Fig. 3** illustrates a schematic diagram of a holdover operation of the clock device in accordance with certain embodiments of the presently disclosed subject matter;

**Fig. 4** illustrates a generalized flow chart of operating the clock device during timing holdover period in accordance with certain embodiments of the presently disclosed subject matter;

**Fig. 5** illustrates a schematical presentation of holdover accuracy and stability achievable when operating in accordance with certain embodiments of the presently disclosed subject matter; and

**Fig. 6** illustrates a generalized flow chart of obtaining history-based thresholds in accordance with certain embodiments of the presently disclosed subject matter

**DETAILED DESCRIPTION**

In the following detailed description, numerous specific details are set forth to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

It is to be understood that the term "signal" used herein excludes transitory propagating signals but includes any other signal suitable for the presently disclosed subject matter.

Unless specifically stated otherwise, throughout the specification the terms "continuously tuning", "continuously processing", "continuously learning", "continuously generating" or the like refer to actions performed based on the availability of new data according to a certain arrangement. For example, such actions can be executed whenever new relevant data become available.

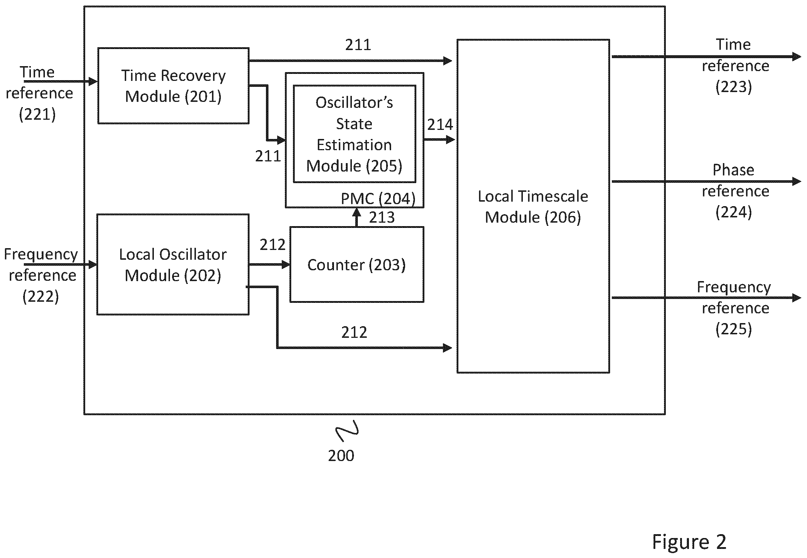

Bearing this in mind, attention is drawn to **Fig. 2** illustrating a generalized block diagram of a clock device in accordance with certain embodiments of the presently disclosed subject matter.

A clock device **200** is configured to receive a reference timing signal **221** (e.g. from a GNSS signal or via PTP messaging) informative of timestamps and metadata defined by the appropriate standard(s). Time recovery module **201** is configured to process the received reference timing signal **221** (referred to hereinafter also as time reference **221**) to reconstruct and maintain a synchronized time reference, and to send to a local timescale module **206** a signal **211** informative of the restored time/phase. Time recovery module **201** is further configured to send, in parallel, signal **211** to an oscillator's state estimation module (OSEM) **205** configured to run on a processing and memory circuitry (PMC) **204**.

Clock device **200** comprises oscillator module **202**. Oscillator module **202** is configured to send to a local timescale module **206** and to a counter **203** a signal **212** informative of its frequency.

For purpose of illustration only, the following description is provided for oscillator module **202** comprising an internal free running oscillator (not shown separately for the simplicity of illustration). Those skilled in the art will readily appreciate that the teachings of the presently disclosed subject matter are, likewise, applicable when oscillator module **202** comprises a controlled oscillator and/or works in conjunction with an external oscillator (e.g. atomic clock) providing a frequency reference signal **222.**

Counter **203** is configured to continuously process signal **212** to count the phase based on the respective frequency. Counter **203** further continuously forwards the results **213** to OSEM **205.**

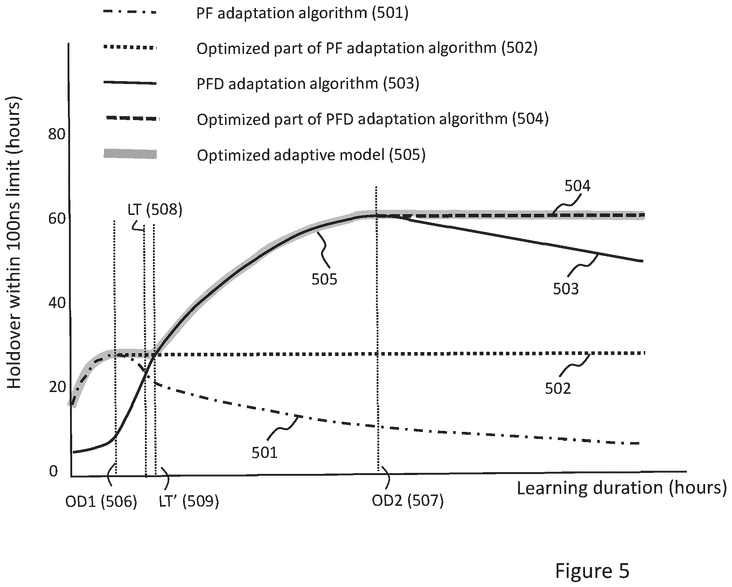

OSEM **205** is configured to continuously learn and calculate the state variables of the local oscillator in the presence of reference timing signal. OSEM **205** continues learning whenever time reference **221** is accessible. Optionally, the learning can be optimized to satisfy certain criteria as further detailed with reference to **Figs. 5- 6.**

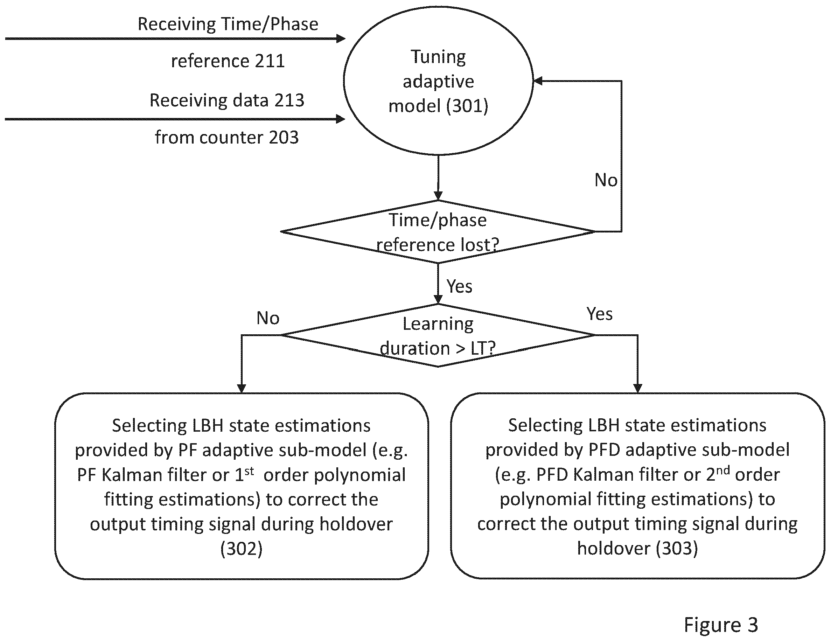

In the absence of time reference **221,** OSEM **205** enables accurate timekeeping by leveraging the previously estimated variables of the oscillator's state as will be further detailed with reference to **Figs. 3 - 5**. OSEM **205** is further configured to send to local timescale module **206** a timing signal **214** informative of the estimated phase and frequency offsets or estimated phase and frequency offsets and the drift.

Local timescale module **206** is configured to provide time keeping based on internal signals **211** and **212** in the presence of time reference and on internal signals **214** and **212** during holdover period. It is noted that signal **212** is provided by the free-running oscillator, and signal **214** provides the corrections made on top of the free-running oscillator.

Local timescale module **206** is further configured to generate outbound timing signals informative of outbound time reference **223,** outbound phase reference **224** and outbound frequency reference **225.**

It is noted that the teachings of the presently disclosed subject matter are not bound by the embodiments described with reference to **Fig. 2.** Equivalent and/or modified functionality can be consolidated or divided in another manner and can be implemented in any appropriate combination of software with firmware and/or hardware.

It is also noted that the source of the reference timing signal is not bound by GNSS. Those skilled in the art will readily appreciate that the teachings of the presently disclosed subject matter are, likewise, applicable to any other appropriate source including any other suitable satellite constellation (e.g. STL (Satellite Time and Location), an atomic clock, a data network, etc.).

Referring to **Fig. 3,** there is illustrated a schematic diagram of operating the clock device during the holdover in accordance with certain embodiments of the presently disclosed subject matter.

OSEM **205** receives restored time/phase reference **211** and data **213** informative of the oscillator 's frequency and phase. In the presence of time reference **221,** OSEM **205** uses the incoming measurements and observations to tune an adaptive model **301** maintained therein, and thus continuously adapts its estimates of the oscillator's state during the entire duration of the respective learning period. In accordance with certain embodiments of the presently disclosed subject matter, adaptive model **301** comprises a phase-frequency (PF) adaptive sub-model and phase-frequency-drift (PFD) adaptive sub-model, both sub-models are continuously tuned during the learning period and continuously provide estimates of a state of the oscillator.

It is noted that the term "tuning the adaptive model" should be expansively construed to cover tuning, at each given point-in-time, at least one sub-model.

It is further noted that unless specifically stated otherwise, the term "during a period" should be expansively construed to cover a time interval within said period without implying that it covers the whole duration of the period.

Responsive to the loss of external time reference **221** and, accordingly, restored time/phase reference **211,** OSEM **205** uses the obtained last before holdover (LBH) estimates of the oscillator's state to enable continuously generating a corrected output timing signal.

OSEM **205** selects the adaptive sub-model whose LBH estimates to be used for further processing, such sub-model being referred to hereinafter as "selected sub-model". The selection is provided in accordance with the relationship between duration of the learning period and a learning threshold (such relationship is referred to hereinafter as learning criteria). Namely, when the duration of the learning period is less than the learning threshold, OSEM **205** selects (**302**) a phase-frequency (2-variables) adaptive sub-model and enables corrections of the output timing signal using the LBH state estimates (i.e. phase and frequency) provided by the PF sub-model. When/if the duration of the learning period exceeds the learning threshold, OSEM **205** selects (**303**) a phase-frequency-drift (3-variables) adaptive sub-model and enables corrections of the output timing signal using the LBH state estimates by PFD sub-model (i.e. phase, frequency and drift).

There are various ways to select a sub-model whose LBH estimates to be used for further processing. Selecting can be provided responsive to the loss of the reference timing signal or prior to the holdover.

For example, in certain embodiments both sub-models, in parallel, can be continuously tuned and can obtain estimates of the oscillator's state during the entire learning period. In such embodiments, upon loss of the reference timing signal, OSEM **205** uses the learning criteria to select LBH estimates to be used, thereby selecting the appropriate sub-model.

In other exemplified embodiments, OSEM **205** can use the learning criteria to select the sub-model(s) to run during certain time intervals of the learning period. For example, both sub-models can run when learning period is less than the learning threshold or, optionally, PFD sub-model can start running later, a certain duration before the learning threshold is reached. In both options, OSEM **205** stops running PF model when the learning period exceeds the learning threshold. Thus, OSEM **205** selects PF sub-model for LBH estimates even if PFD model runs before the learning threshold and selects PFD sub-model as the only sub-model running when learning period exceeds the learning threshold.

It is noted that in certain embodiments selection of a sub-model and/or calculating the respective offsets (and drift when relevant) can be provided by local timescale module 206.

In certain embodiments, the learning threshold can be predefined in accordance with known characteristics of the oscillator (e.g. maximal time error, aging, Allan Variance and deviation thereof, etc.). In other embodiments, the learning threshold can be calculated (e.g. by OSEM **205**) based on historical data informative of phase and frequency changes of the local oscillator during its operation prior to the holdover. Non-limiting examples of defining the learning thresholds are further detailed with reference to **Figs. 5 - 6.**

It is noted that the duration of the learning period and the learning thresholds can be expressed in the units of time and/or number of iterations.

The adaptive algorithms used in the adaptive sub-models are configured to estimate the state of the free-running oscillator based on incoming measurements and predictions.

By way of non-limiting example, 2-variables (phase-frequency) adaptive sub-model can be based on 1st order polynomial fitting estimations algorithm fitting data points to a linear model. In other embodiments, the 2-variables adaptive sub-model can be based on a phase-frequency Kalman filter algorithm. Phase-frequency (PF) Kalman filter is configured to jointly estimate both phase and frequency of the oscillator considering the correlations between phase and frequency variations.

By way of another non-limiting example, the 3-variables (phase-frequency-drift) adaptive sub-model can be based on 2nd order polynomial fitting estimations algorithm. The sub-model can involve fitting a second-order polynomial function to the data points by minimizing the sum of the squared differences between the reference timing signal and the internal/external oscillator. In other embodiments, the 3-variables adaptive sub-model can be based on phase-frequency-drift Kalman filter algorithm. Phase-frequency-drift (PFD) Kalman filter is configured to jointly estimate phase, frequency and drift of the oscillator.

Those skilled in the art will readily appreciate that the teachings of the presently disclosed subject matter are, likewise, applicable to any other adaptive models combining 2-variables (phase-frequency) adaptive sub-models with a 3-variables (phase-frequency-drift) sub-model as disclosed above.

It is noted that the adaptive model can include a 2-variables sub-model and a 3-variables sub-model based on the same or on different kinds of algorithms. By way of non-limiting example, the 2-variables sub-model can be based on a PF Kalman filter while the 3-variables sub-model can be based on 2nd order polynomial fitting estimations (and *vice versa*).

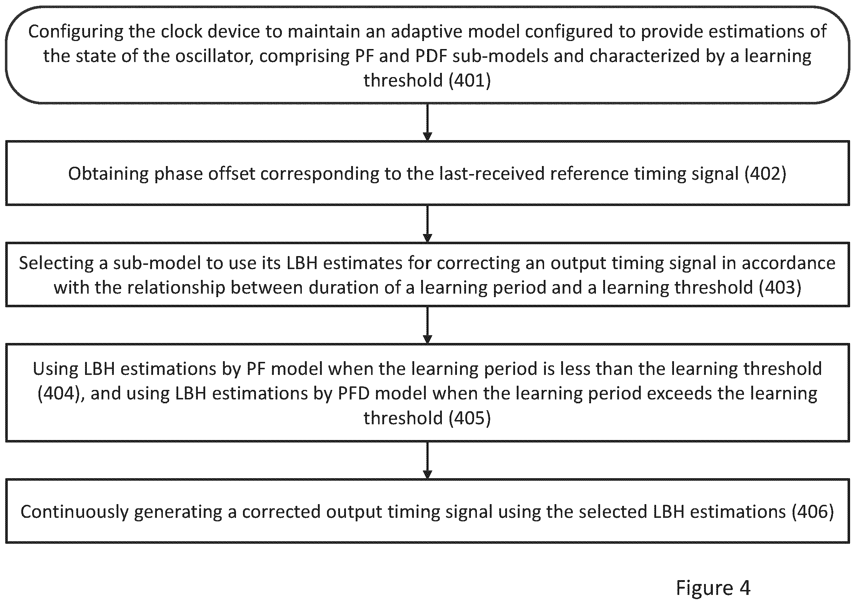

The generalized flow chart of operating the clock device during timing holdover period is further illustrated in **Fig. 4.**

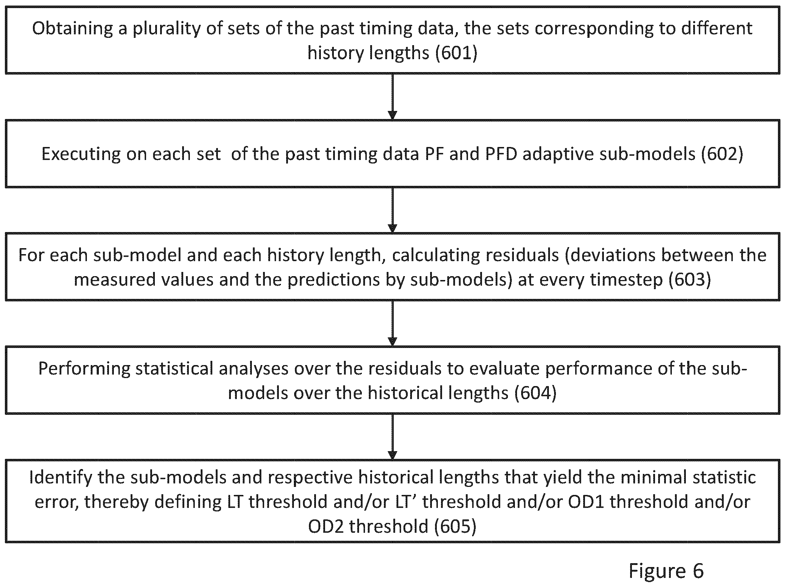

Clock device **200** is configured to maintain (**401**) (e.g. in OSEM **205**) an adaptive model comprising PF and PFD sub-models and characterized by the learning threshold depending on characteristics of the oscillator. Maintaining the adaptive model comprises continuously tuning the sub-models during the learning period and continuously providing estimates of the oscillator's state in the presence of the time reference. In certain embodiments, the learning threshold can be pre-configured in accordance with a predefined value. In other embodiments, clock device **200** can calculate and configure the learning threshold when operating in the presence of the time reference. As further detailed in **Fig. 6,** the learning threshold can be calculated based on historical data informative of state variables of the oscillator prior to the holdover.

Upon loss of time/phase reference, clock device **200** (e.g. OSEM **205**) obtains (**402**) the phase offset corresponding to the last- received reference timing signal. In certain embodiments, OSEM **205** can continuously receive signal **211** informative of the restored time/-phase and, thus, be aware of the respective last-received data. In other embodiments, the respective last-received data can be sent to OSEM **205** responsive to the loss of reference timing signal.

Responsive to the loss of the reference timing signal, clock device **200** uses the LBH state estimates by the adaptive model to continuously generate (**406**) a corrected output timing signal informative of time, frequency and phase references (e.g. denoted as **223, 224, 225** in **Fig. 2**).

Prior to using said state estimates during the holdover, clock device **200** selects (**403**) a sub-model in accordance with the relationship between duration of the learning period and a learning threshold. Namely, the clock device selects to use (**404**) the estimates of frequency offset by the phase-frequency adaptive sub-model when the learning period is less than the learning threshold, and selects to use (**405**) the estimates of frequency offset and drift by a phase-frequency-drift adaptive sub-model when the learning period exceeds the learning threshold.

It is noted that in certain embodiments operations **403 - 405** are provided in the presence of reference timing signal, and in other embodiments said operations are provided responsive to the loss of reference timing signal.

When using PF model, phase offset $\Delta\varphi$ (t) is calculated as $\Delta\varphi$ (t) = $\Delta\varphi$ (0) + $\Delta f^* t$, and when using PFD model, phase offset $\Delta$cp (*t*) is calculated as $\Delta$cp (*t*) = $\Delta$cp

$$(0) + \Delta f^* t \quad {}^{+0.5 \left(\frac{d\Delta f}{dt}\right) \, * \, t^2}$$ , where $\Delta cp$ (0) is the phase offset last received from the reference timing signal, $\Delta f$ is the calculated frequency offset and $t$ is the elapsed time.

**Fig. 5** schematically presents holdover accuracy and stability achievable when operating in accordance with certain embodiments of the presently disclosed subject matter.

Curve **501** represents the dependency between the accuracy and the stability during holdover and the duration of the learning period (X-axis) of the respectively applied PF adaptive algorithm. By way of non-limiting example, accuracy and stability during holdover is represented by duration of holdover with the required accuracy (Y-axis).

Likewise, curve **503** represents the dependency between the accuracy/stability during holdover and the duration of learning period of applied PFD adaptive algorithm. As illustrated, when the learning period is short, using estimates by the PF adaptive algorithm provides better results than by the PFD adaptive algorithm. However, when the learning period exceeds learning threshold (LT) **508,** using estimates by PFD algorithm provides better results than by PF algorithm.

Thus, in accordance with certain embodiments of the presently disclosed subject matter, the accuracy/stability can be improved by using estimates by PF sub-model when available learning period is less than LT **508** and using estimates by PFD sub-model when available learning period exceeds LT **508.**

It is noted that the value of the learning threshold can depend on certain adaptation algorithms implemented in PF and PFD sub-models.

Further to above, the inventor has recognized and appreciated that increasing the duration of the learning period can lead to degradation of adaptive algorithms. For example, due to temperature changes affecting the oscillator and/or nonlinear changes in drift, its state variables' behavior may change over time and too old historical data may become irrelevant for estimations.

Thus, to optimize a given adaptive algorithm, the inventor has proposed the following:

define, for the given adaptive algorithm, an optimal duration of learning period and a respective optimal duration (OD) threshold;

for learning periods exceeding the optimal duration threshold, provide continuously tuning the given adaption algorithm in accordance with state variables corresponding to a continuously moving sliding window with duration equal to the optimal duration and starting point at the OD threshold.

As illustrated in **Fig. 5,** the maximum of effectiveness of a regular PF algorithm (curve **501**) corresponds to a learning period defined by a first optimal duration (OD1) threshold **506,** and curve **502** illustrates effectiveness of the PF algorithm optimized for learning period exceeding OD1. Likewise, maximum of effectiveness of regular PFD algorithm (curve **503**) corresponds to learning period defined by a second optimal duration threshold (OD2) **507,** and curve **504** illustrates effectiveness of the PFD algorithm optimized for learning period exceeding OD2 **507.**

In the illustrated case of optimized PF and PFD adaptive algorithms, PFD optimized algorithm becomes more effective than PF optimized algorithm for learning periods exceeding the learning threshold LT' **509.**

Curve **505** represents the optimized holdover accuracy and stability achievable by the combined adaptive model.

Thus, in accordance with certain embodiments of the currently presented subject matter, operating the oscillator during the holdover can be optimized as following:

PF sub-model to be used when duration of the learning period is less than LT' **509,** wherein:

when learning period is less than OD1 threshold, PF algorithm is tuned based on entire available learning history; and

when learning period exceeds OD1 threshold, PF algorithm is tuned based on the learning history corresponding, at each timestep, to data in a backward window with duration OD1;

PFD sub-model to be used when duration of the learning period exceeds LT' **509,** wherein:

when learning period is less than OD2 threshold, PFD algorithm is tuned based on entire available learning history; and

when learning period exceeds OD2 threshold, PFD algorithm is tuned based on the learning history corresponding, at each timestep, to data in a backward window with duration OD2.

By way of non-limiting examples, the values of the thresholds can be in the order of few days or even tens of days for the clock devices using such accurate frequency reference as a Cesium clock, and can be in order of few hours or few days for the clock devices using less accurate frequency references, such as a TCXO (Temperature-Compensated Crystal Oscillator), or OCXO (Oven Controlled Crystal Oscillator) or Rubidium clock.

OD1 and OD2 thresholds are informative of respective optimal learning durations, and LT and LT' thresholds are informative of the threshold for switching between the sub-models in, respectively, the cases with non-optimized and the optimized learning duration.

In certain embodiments, the values of the thresholds can be obtained by a simulation. For example, simulating the thresholds can include the following steps:

> pre-determining values of frequency offset and drift;

> estimating frequency offset and drift with PF and PFD sub-models, while considering the frequency stability characteristics of the clock, characterized by the Allan Variance specified for the oscillator;

> simulating the holdover performance by using the residuals of the pre-determined frequency offset and drift and the estimated ones; and

> using the simulation results to set the values of LT, LT', OD1 and/or OD2.

**Fig. 6** illustrates a generalized flow chart of obtaining history-based thresholds (LT, LT', OD1 and/or OD2). In accordance with certain embodiments of the presently disclosed subject matter, clock device **200** can be configured to store values (e.g. in PMC **204**) informative of time/phase and frequency restored during operating the clock device in the presence of the reference timing signal (such values are referred to hereinafter as "past timing data").

Clock device **200** (e.g. PMC **204**) obtains (**601**) a plurality of sets of the past timing data, different sets corresponding to different history lengths. Clock device **200** applies phase-frequency (PF) and phase-frequency-drift (PFD) adaptive sub-models (**602**) for each set of the past timing data.

For each sub-model and each history length, clock device **200** calculates (**603**) residuals for every timestep. The term "residuals" refers to deviations between the past timing data and the respective predictions by the sub-models. The term "timestep" refers to the interval at which the clock updates its state and/or measurements.

Clock device **200** (e.g. PMC **204**) performs statistical analyses over the residuals to evaluate (**604**) performance of the sub-models over the respective historical lengths. Further the clock device identifies the sub-models and respective historical lengths that yields the minimal statistic error, thereby defining (**605**) the respective learning threshold for switching between the sub-models. Likewise, the clock device identifies for each sub-model the optimal learning duration, thereby defining OD1 and OD2 thresholds.

It is noted that above history-based analyses can be provided for different pairs of PF and PFD models, thereby enabling selection of the pair best fitting timekeeping criteria and setting the respective thresholds thereof.

It is further noted that the teaching above are, likewise, applicable for holdover period of a clock device operating with a controlled oscillator. Furthermore, when control of the oscillator in the presence of reference timing signal is provided via a feedback loop, a respective adaptive model can be applied in accordance with at least one of LT, LT', OD1 and OD2 thresholds as disclosed above.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

**Claims**

1. A method of timekeeping of a clock device operating in conjunction with an oscillator, the method comprising:

> in the presence of an inbound reference timing signal, continuously tuning during a learning period a phase-frequency (PF) adaptive sub-model using a PF adaptive algorithm and a phase-frequency-drift (PFD) adaptive sub-model using a PFD adaptive algorithm, both sub-models continuously providing estimates of a state of the oscillator;
> selecting a sub-model to use its last before holdover (LBH) estimates for correcting an output timing signal, the selection provided in accordance with the relationship between duration of the learning period and a learning threshold characterizing the oscillator; and
> during a holdover period, continuously generating a corrected output timing signal using the LBH estimates provided by the selected sub-model.

**2.** The method of Claim 1 further comprising:

when a duration of the learning period is less than the learning threshold, using LBH estimates of phase and frequency of the oscillator provided by the PF adaptive sub-model; and when the duration of the learning period exceeds the learning threshold, using LBH estimates of phase, frequency and drift of the oscillator provided by the PFD adaptive sub-model.

**3.** The method of Claims 1 or 2, wherein the learning threshold is predefined with the help of simulation using known characteristics of the oscillator and is pre-configured for the clock device.

**4.** The method of Claims 1 or 2, wherein the learning threshold is calculated based on historical data informative of phase and frequency changes of the oscillator during its operation in the presence of inbound reference timing signal and is configured during operation of the clock device.

**5.** The method of any one of Claims 1 - 4, wherein the oscillator operating in conjunction with the clock device is an internal oscillator of the clock device or an external oscillator.

**6.** The method of any one of Claims 1 - 5, wherein the oscillator operating in conjunction with the clock device is a free running oscillator or a controlled oscillator.

**7.** The method of any one of Claims 1 - 6, wherein the PF adaptive sub-model uses a $1^{st}$ order polynomial fitting estimations algorithm or a phase-frequency Kalman filter algorithm and wherein PFD adaptive sub-model uses a $2^{nd}$ order polynomial fitting estimations algorithm or a phase-frequency-drift Kalman filter algorithm.

**8.** The method of any one of Claims 1 - 7, wherein the PF adaptive sub-model and PFD adaptive sub-model are based on the same or on different kinds of algorithms.

**9.** The method of any one of Claims 1 - 8, further comprising:

storing values informative of time/phase and frequency restored during operating the clock device in the presence of the reference timing signal thereby giving rise to past timing data; obtaining a plurality of sets of the past timing data, different sets corresponding to different history lengths; applying one or more phase-frequency adaption algorithms and one or more phase-frequency-drift adaption algorithm for each set of the past timing data; calculating, for each adaptive algorithm, for each history length and for every timestep, residuals informative of deviations between respective past timing data and predictions by the adaptive algorithms; and performing statistical analyses over the residuals to identify an optimal duration of learning period for each of the adaptive algorithms, thereby defining the learning threshold.

**10.** The method of any one of Claims 1 - 9, further comprising defining a first optimal duration (OD1) threshold informative of the optimal duration of tuning a phase-frequency adaptive algorithm used in PF adaptive sub-model and/or a second optimal duration (OD2) threshold informative of the optimal duration of a phase-frequency-drift adaptive algorithm used in PFD adaptive sub-model.

**11.** The method of Claim 10, wherein the method of Claim 9 is used to define at least one of OD1 threshold and OD2 threshold.

**12.** The method of Claim 10, wherein at least one of the OD1 threshold and the OD2 threshold is predefined with the help of simulation using known characteristics of the oscillator and is pre-configured for the clock device.

**13.** The method of Claims 10 or 11, further comprising:

using the estimates by the PF sub-model when the duration of the learning period is less than the learning threshold, wherein:

- when the learning period is less than the OD1 threshold, using the estimates by the PF sub-model that is tuned based on entire available learning history; and
- when learning period exceeds OD1 threshold, using the estimates by the PF sub-model that is tuned based on the learning history corresponding, at each timestep, to data in a backward window with duration OD1;

using the estimates by the PFD sub-model when duration of the learning period exceeds the learning threshold, wherein:

- when learning period is less than OD2 threshold, using the estimates by the PFD sub-model that is tuned based on entire available learning history; and
- when learning period exceeds OD2 threshold, using the estimates by the PFD sub-model that is tuned based on the learning history corresponding, at each timestep, to data in a backward window with duration OD2.

14. A clock device configured to perform timekeeping in accordance with the method stages of any one of Claims 1 - 13.

15. A computer program product implemented on a non-transitory computer usable medium having computer readable program code embodied therein to cause the computer to perform the method stages of any one of Claims 1 - 13.

PRIOR ART

Figure 1

Figure 2

Receiving Time/Phase
reference 211

Receiving data 213
from counter 203

**Tuning adaptive model (301)**

No

**Time/phase reference lost?**

Yes

**Learning duration > LT?**

No                                    Yes

**Selecting LBH state estimations provided by PF adaptive sub-model (e.g. PF Kalman filter or $1^{st}$ order polynomial fitting estimations) to correct the output timing signal during holdover (302)**

**Selecting LBH state estimations provided by PFD adaptive sub-model (e.g. PFD Kalman filter or $2^{nd}$ order polynomial fitting estimations) to correct the output timing signal during holdover (303)**

Figure 3

Configuring the clock device to maintain an adaptive model configured to provide estimations of the state of the oscillator, comprising PF and PDF sub-models and characterized by a learning threshold (401)

Obtaining phase offset corresponding to the last-received reference timing signal (402)

Selecting a sub-model to use its LBH estimates for correcting an output timing signal in accordance with the relationship between duration of a learning period and a learning threshold (403)

Using LBH estimations by PF model when the learning period is less than the learning threshold (404), and using LBH estimations by PFD model when the learning period exceeds the learning threshold (405)

Continuously generating a corrected output timing signal using the selected LBH estimations (406)

Figure 4

Figure 5

Obtaining a plurality of sets of the past timing data, the sets corresponding to different history lengths (601)

Executing on each set of the past timing data PF and PFD adaptive sub-models (602)

For each sub-model and each history length, calculating residuals (deviations between the measured values and the predictions by sub-models) at every timestep (603)

Performing statistical analyses over the residuals to evaluate performance of the sub-models over the historical lengths (604)

Identify the sub-models and respective historical lengths that yield the minimal statistic error, thereby defining LT threshold and/or LT' threshold and/or OD1 threshold and/or OD2 threshold (605)

Figure 6

| Europäisches Patentamt / European Patent Office / Office européen des brevets | **EUROPEAN SEARCH REPORT** | **Application Number** EP 24 18 4306 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI XIALI ET AL: "A Multi-model Kalman Filter Clock Synchronization Algorithm based on Hypothesis Testing in Wireless Sensor Networks", PROCEEDINGS OF THE 2ND INTERNATIONAL CONFERENCE ON ELECTRONIC AND MECHANICAL ENGINEERING AND INFORMATION TECHNOLOGY (2012), 1 September 2012 (2012-09-01), XP093224060, Paris, France DOI: 10.2991/emeit.2012.44 ISBN: 978-90-78-67760-4 * pages 1-5 * | 1-15 | INV. G06F1/04 |
| X | QIANG LIU ET AL: "AdaSynch: A General Adaptive Clock Synchronization Scheme Based on Kalman Filter for WSNs", WIRELESS PERSONAL COMMUNICATIONS, KLUWER ACADEMIC PUBLISHERS, DO, vol. 63, no. 1, 22 August 2010 (2010-08-22), pages 217-239, XP035011602, ISSN: 1572-834X, DOI: 10.1007/S11277-010-0116-3 * 1, 12-20; figures 4-12 * | 1,14,15 | |
| A | BENJAMIN R HAMILTON ET AL: "ACES", PROCEEDINGS OF THE 14TH ACM INTERNATIONAL CONFERENCE ON MOBILE COMPUTING AND NETWORKING, MOBICOM '08, ACM PRESS, NEW YORK, NEW YORK, USA, 14 September 2008 (2008-09-14), pages 152-162, XP058391682, DOI: 10.1145/1409944.1409963 ISBN: 978-1-60558-096-8 * 1, 3-11 * | 1-15 | |

**TECHNICAL FIELDS SEARCHED (IPC)**

G06F
H03L
G06N

-/--

The present search report has been drawn up for all claims

| Place of search | Date of completion of the search | Examiner |
|---|---|---|
| Munich | 14 November 2024 | González Carballo, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/261032 A1 (BATENI EHSAN [CA]) 18 August 2022 (2022-08-18) * paragraphs [0084] - [0105]; figures 8-12 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 14 November 2024 | González Carballo, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4306

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2024

| Patent document cited in search report | Publication date | Patent family member(s) | Publication date |
|---|---|---|---|
| US 2022261032 A1 | 18-08-2022 | CN 116830461 A | 29-09-2023 |
| | | DE 112021007078 T5 | 14-12-2023 |
| | | US 2022261032 A1 | 18-08-2022 |
| | | WO 2022173522 A1 | 18-08-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230315025 A
- US 20210266086 A
- US 20090278616 A
- US 20090167443 A
- US 7424069 B

**Non-patent literature cited in the description**

- **J. LEVINE**. The statistical modeling of atomic clocks and the design of time scales. *Rev Sci Instrum.*, 2012, vol. 83, 021101
- **L. BREAKIRON**. A Comparative Study of Clock Rate and Drift Estimation. NASA. Goddard Space Flight Center. *The 25th Annual Precise Time and Time Interval (PTTI) Applications and Planning Meeting*, 1994